Europäisches Patentamt

European Patent Office

Office européen des brevets

(11) Publication number: **0 316 924 B1**

# EUROPEAN PATENT SPECIFICATION

(45) Date of publication of patent specification: **26.02.92**  (51) Int. Cl.⁵: **B01D  53/14**

(21) Application number: **88119157.1**

(22) Date of filing: **18.11.88**

(54) Solvent composition and process employing same.

(30) Priority: **20.11.87 US 123227**

(43) Date of publication of application:
**24.05.89 Bulletin  89/21**

(45) Publication of the grant of the patent:
**26.02.92 Bulletin  92/09**

(84) Designated Contracting States:
**BE CH DE FR GB IT LI**

(56) References cited:
**DE-A- 3 542 537**
**FR-A- 2 207 902**

(73) Proprietor: **SANDOZ AG**
**Lichtstrasse 35**
**CH-4002 Basel(CH)**

(84) Designated Contracting States:
**BE CH FR GB IT LI**

(73) Proprietor: **SANDOZ-PATENT-GMBH**
**Humboldtstrasse 3**
**W-7850 Lörrach(DE)**

(84) Designated Contracting States:
**DE**

(72) Inventor: **Ehrler, Arthur James**
**4808 Southwood Drive**
**Brooklyn Ohio 44144(US)**

## Description

The invention relates to a process for the recovery of materials, such as solvents, from gaseous streams containing the same and to selective solvent compositions used in this process.

From DE-A-35 42 537 a process is known wherein a gaseous stream, such as an air stream, is contacted with a liquid selective solvent for a component of the gaseous stream for the removal of said component from the gaseous stream, the selective solvent is recovered and heated to an elevate temperature, this temperature being higher than the temperature at which the selective solvent was contacted with the gaseous stream in order to release the absorbed component from the selective solvent, the selective solvent is cooled and brought again into contact with the gaseous stream to repeat the operation.

Illustrative of those volatile materials or pollutants which are readily handled, removed and recovered from the gas stream containing the same when treated in accordance with the practice of this process, are the relatively high vapor pressure organic materials, such as alcohols, ethers, esters, ketones, aldehydes, hydrocarbons, such as benzene, toluene and the xylenes, trichloroethylene, ethyl alcohol, methyl alcohol, n-butyl acetate, ethyl acetate, methyl ethyl ketone, methylene chloride, formaldehyde, ethyl ether, methyl ethyl ether, acetaldehyde, acrolein, the various mercaptans, such as methyl mercaptan, ethyl mercaptan, the various amines, such as the methylamines, ethanolamine, the low molecular weight $C_{3-6}$-alkanes and cycloalkanes, the butadienes, the cyclopentadienes and the like, the volatile aromatic compounds and hydrocarbons and, indeed, substantially any volatile material which can be preferentially dissolved by direct contact with a liquid selective solvent therefor. Other materials which are removable and recoverable in accordance with the practice of this process include arsine, phosphine, $H_2S$, $SO_2$ and other volatile inorganic and metallo-organic compounds.

In the practice of this process the selective solvent employed should desirably have a high boiling point and a low vapor pressure, exhibit selectivity and/or high solvent capacity for the material or pollutant in the gaseous stream to be removed. More particularly, the selective solvent in the case of gas-liquid contact should have an affinity for the material to be removed from the gaseous stream and have, in the instance when a gaseous stream is treated, a high Henry Law's constant K for the material to be treated ($c = KP$) where c is the concentration of the gaseous material to be removed in the solvent, K is the Henry Law's constant and P is the vapor pressure of the pollutant material to be removed above the liquid mixture of the selective solvent and the pollutant. Desirably, the selective solvent employed in the practice of this process should not foam or be substantially non-foaming when aerated, be readily available at a relatively low cost, be thermally stable, exhibit low heat capacity (Cp) and have low or substantially no toxicity.

The liquid selective solvent employed in this process may be water immiscible and is desirably selected to have a low vapor pressure at ambient temperatures and at temperatures in the range 95° - 260°C and to have a high boiling point at atmospheric pressure, such as a boiling point of at least about 260°C, more or less, at atmospheric pressure. Selective solvents which are useful in the practice of this process include the adipates, succinates, glutarates, the various alkyl phthalates and other esters of di- and mono-basic acids and glycols, the various organic phosphates, including the alkyl and aryl phosphates, particularly those phthalates and organic phosphates or organic phosphorus compounds which are liquid at about ambient temperature in the range 4.5° -32°C and which are useful as plasticizers.

Further details about the process and the equipment used in this process can be taken from the description of DE-A-3542537 the contents of which are incorporated by reference.

During the tests for removing hydrocarbons from an air stream by scrubbing the air stream with a high molecular weight organic liquid, it was observed that the packed tower scrubber did not perform with the expected efficiency. Whereas tests with impingers had indicated that an efficiency of 90 - 98 % could be expected, actual packed tower tests showed efficiencies much lower, i.e. about 40 - 60 %.Visual inspection through view ports of the tower packing during operation showed that the liquid selective solvent or scrubbing liquid seemed to "sheet" off the packing rather than have the normal wetting action usually associated with water. Different packings were tried, Tellerettes® Pall Rings®, Intalox Saddles® but the efficiency did not increase. Changing other operating parameters, i.e., liquid flow, air flow, etc., had very little effect on the overall efficiency of the tower. After that, a tray tower (sieve tray) was tried. Although the efficiency improved somewhat, to about 60-70 %, it was still far below the anticipated 95 %.

It was discovered that the viscosity of the liquid selective solvent or scrubbing liquid in a direct countercurrent gas-liquid contact in a packed tower or sieve tray scrubber controls the scrubbing efficiency of the tower. It was observed that with liquid selective solvents having viscosities above about 35 mPa s, the normal operating parameters of a packed tower i.e., liquid flow, air flow, type or depth of packing have little or no effect on efficiency and this held true for a tray type tower although the efficiency is somewhat higher for this type of tower. It appeared that the viscosity of the liquid selective solvent was critical or controlling.

The viscosity is determined using a falling ball viscosimeter. A glass tube 25 cm long and 2.5 cm in diameter is filled with solvent. A glass ball (2.53 g/ml) is released at the top of the tube and the time to fall a known distance in the tube is recorded. This time is a function of the viscosity of the solvent. The viscosity is expressed in mPa s (milliPascal per second) and calculated as follows:

Viscosity = Viscosimeter constant x (density of ball - density of solvent) x time of descent

The invention, therefore, consists in a liquid selective solvent composition consisting essentially of at least two of the selective solvents selected from the group consisting of diethyl phthalate, dioctyl phthalate, dioctyl adipate, acetyltributyl citrate and diisohexyl phthalate, said composition having a viscosity of less than 35 mPa s at a temperature of about 25° C.

The invention also consists in a method of removing a pollutant or other material from a gaseous stream containing the same which comprises contacting said gaseous stream with a liquid selective composition as hereinabove described and removing the resulting treated gaseous stream now having a reduced amount of said pollutant therein.

Liquid solvents which have been found to be useful in the practice of this invention, particularly blends or mixtures thereof, include:

| Solvent | Viscosity mPa s at 25° C |
|---|---|
| Diethyl phthalate (DEP) | 9.5 |
| Di-2-ethylhexyl phthalate (DOP) | 5.8 |
| Di-2-ethylhexyl adipate (DOA) | 12 |
| Acetyltributyl citrate (CA4) | 32.7 |
| Diisohexyl phthalate (DHP) | 33 |

Useful blends of these solvents, which blends have a viscosity less than 30 mPa s, include 60 mol percent DEP and 40 mol percent DOP having a viscosity of 21 mPa s, 80 mol percent DEP and 20 mol percent DOP having a viscosity of 17 mPa s, 80 mol percent CA4 and 20 mol percent DOA having a viscosity of 27 mPa s, 60 mol percent CA4 and 40 mol percent DOA having a viscosity of 21 mPa s, 40 mol percent CA4 and 60 mol percent DOA having a viscosity of 18 mPa s, and 80 mol percent DOA and 20 mol percent CA4 having a viscosity of about 14 mPa s.

### Example

To demonstrate the advantages of the practices of this invention, tests measuring the effect of viscosity on mass transfer properties of various solvents was investigated. Performance of each solvent was based on its removal efficiency of methyl ethyl ketone in direct gas-liquid counter-current contact through a packed tower. Two systems of solvents with different viscosities were prepared by mixing a high and a low viscous solvent. The two systems were blends of diethyl phthalate with dioctyl phthalate and blends of dioctyl adipate with acetyltributyl citrate. For both systems, the removal efficiency dropped sharply when the viscosity of the solvent exceeded approximately 35 mPa s. Also, the performance of diisohexyl phthalate, considering its viscosity, was in reasonable agreement with what was predicted from the performance of DOP/DEP system which has similar mass transfer properties.

Test performance data for the solvent DEP/DOP system both at 80 % flooding and constant gas and liquid rates, indicate a better performance for the system as the viscosity of the solvent is decreased, particularly below 30 mPa s. Also, a more drastic improvement in removal efficiency is evident at 80 % flooding because the less viscous solution allows for higher liquid rates through the column to achieve optimum operating conditions. In addition, at 80 % flooding a more pronounced drop in efficiency is evident when the viscosity is greater than 35 mPa 5. Performance data for the solvent DOA/CA4 system at 80 % flooding show that efficiency drops as the viscosity of the solution exceeds 30 mPa s and performance is affected dramatically when the viscosity of the solvent exceeded approximately 35 mPa s.

### Claims

**1.** A liquid selective solvent composition consisting essentially of at least two of the selective solvents selected from the group consisting of diethyl phthalate, dioctyl phthalate, dioctyl adipate, acetyltributyl citrate and diisohexyl phthalate, said composition having a viscosity of less than 35 mPa s at a temperature of about 25° C.

2. A composition in accordance with Claim 1 wherein said composition consists essentially of about 80 mol-% diethyl phthalate and about 20 mol-% dioctyl phthalate.

3. A composition in accordance with Claim 1 wherein said composition consists essentially of about 60 mol-% diethyl phthalate and about 40 mol-% dioctyl phthalate.

4. A composition in accordance with Claim 1 wherein said composition consists essentially of about 80 mol-% dioctyl adipate and about 20 mol-% acetyltributyl citrate.

5. A composition in accordance with Claim 1 wherein said composition consists essentially of about 60 mol-% dioctyl adipate and about 40 mol-% acetyltributyl citrate.

6. A composition in accordance with Claim 1 wherein said composition consists essentially of about 20 mol-% dioctyl adipate and about 80 mol-% acetyltributyl citrate.

7. A liquid selective solvent composition consisting essentially of diethyl phthalate, dioctyl phthalate, dioctyl adipate, acetyltributyl citrate and diisohexyl phthalate and an inert organic liquid diluent, said solvent composition having a viscosity of less than 35 mPa s at about 25° C.

8. A method of removing a pollutant or other material from a gaseous stream containing the same which comprises contacting said gaseous stream with a liquid selective solvent composition according to claim 1 and removing the resulting treated gaseous stream now having a reduced amount of said pollutant therein.

9. A method in accordance with Claim 8 wherein said gaseous stream is an air stream.

10. A method in accordance with Claim 8 wherein said pollutant or other material is an organic compound.

**Revendications**

1. Composition de solvants liquides sélectifs, constituée essentiellement d'au moins deux des solvants sélectifs choisis parmi le phtalate de diéthyle, le phtalate de dioctyle, l'adipate de dioctyle, l'acétyl-citrate de tributyle et le phtalate de diisohexyle, ladite composition ayant une viscosité inférieure à 35 mPa.s à une température d'environ 25° C.

2. Composition selon la revendication 1, caractérisée en ce que ladite composition est constituée esentiellement d'environ 80% en moles de phtalate de diéthyle et d'environ 20% en moles de phtalate de dioctyle.

3. Composition selon la revendication 1, caractérisée en ce que ladite composition est constituée essentiellement d'environ 60% en moles de phtalate de diéthyle et d'environ 40% en moles de phtalate de dioctyle.

4. Composition selon la revendication 1, caractérisée en ce que ladite composition est constituée essentiellement d'environ 80% en moles d'adipate de dioctyle et d'environ 20% en moles d'acétyl-citrate de tributyle.

5. Composition selon la revendication 1, caractérisée en ce que ladite composition est constituée essentiellement d'environ 60% en moles d'adipate de dioctyle et d'environ 40% en moles d'acétyl-citrate de tributyle.

6. Composition selon la revendication 1, caractérisée en ce que ladite composition est constituée essentiellement d'environ 20% en moles d'adipate de dioctyle et d'environ 80% en moles d'acétyl-citrate de tributyle.

7. Composition de solvants liquides sélectifs, constituée essentiellement de phtalate de diéthyle, de phtalate de dioctyle, d'adipate de dioctyle, d'acétyl-citrate de tributyle et de phtalate de diisohexyle, et d'un diluant liquide organique inerte, ladite composition de solvants ayant une viscosité inférieure à 35 mPa.s à 25° C environ.

8. Procédé d'extraction d'un polluant ou d'une autre substance à partir d'un courant gazeux les contenant, qui comprend la mise en contact dudit courant gazeux avec une composition de solvants liquides sélectifs selon la revendication 1 et l'évacuation du courant gazeux traité résultant, contenant désormais une quantié réduite dudit polluant.

9. Procédé selon la revendication 8, dans lequel ledit courant gazeux est un courant d'air.

10. Procédé selon la revendication 8, dans lequel ledit polluant ou ladite autre substance est un composé organique.

**Patentansprüche**

1. Ein flüssiges, selektives Lösungsmittelgemisch, bestehend aus mindestens zwei selektiver Lösungsmittel aus der Gruppe Diäthylphthalat, Dioctylphthalat, Dioctyladipat, Acetyltributylcitrat und Diisohexylphthalat, wobei dieses Gemisch bei einer Temperatur von etwa 25° C eine Viscosität unter 35 mPa s aufweist.

2. Ein Gemisch gemäss Anspruch 1, bestehend aus etwa 80 Mol-% Diäthylphthalat und etwa 20 Mol-% Dioctylphthalat.

3. Ein Gemisch gemäss Anspruch 1, bestehend aus etwa 60 Mol-% Diäthylphthalat und etwa 40 Mol-% Dioctylphthalat.

4. Ein Gemisch gemäss Anspruch 1, bestehend aus etwa 80 Mol-% Dioctyladipat und etwa 20 Mol-% Acetyltributylcitrat.

5. Ein Gemisch gemäss Anspruch 1, bestehend aus etwa 60 Mol-% Dioctyladipat und etwa 40 Mol-% Acetyltributylcitrat.

6. Ein Gemisch gemäss Anspruch 1, bestehend aus etwa 20 Mol % Dioctyladipat und etwa 80 Mol-% Acetyltributylcitrat.

7. Ein flüssiges, selektives Lösungsmittelgemisch, bestehend aus Diäthylphthalat, Dioctylphthalat, Dioctyladipat, Acetyltributylcitrat und Diisohexylphthalat und einer inerten organischen Verdünnungsflüssigkeit, wobei das Lösungsmittelgemisch eine Viskosität unter 35 m Pa s bei etwa 25° C aufweist.

8. Eine Methode zur Entfernung einer Verunreinigung oder anderer Stoffe aus einem Gasstrom, der sie enthält, dadurch gekennzeichnet, dass man den Gasstrom mit einem flüssigen, selektiven Lösungsmittelgemisch gemäss Anspruch 1 in Kontakt bringt und den behandelten Gasstrom, der nun eine geringere Menge Verunreinigung enthält, abtrennt.

9. Eine Methode gemäss Anspruch 8, worin der Gasstrom ein Luftstrom ist.

10. Eine Methode gemäss Anspruch 8, worin die Verunreinigung oder andererer Stoff eine organische Verbindung ist.